# FASCICULE DE BREVET EUROPEEN

(11) **EP 4 204 237 B1**
(45) Date de publication et mention de la délivrance du brevet: **03.01.2024**
(21) Numéro de dépôt: 21810077.4
(22) Date de dépôt: 19.10.2021
(51) Int. Cl.: B60B 1/04, B60B 31/00, B60B 31/02, B60B 27/02

(54) **INSTALLATION ET PROCEDE D'ENFILAGE DE RAYONS DANS UN MOYEU A DEUX FLASQUES D'UNE ROUE A RAYONS**
VORRICHTUNG UND VERFAHREN ZUM EINFÄDELN VON SPEICHEN IN EINE ZWEIFLANSCHNABE EINES SPEICHENRADES
INSTALLATION AND METHOD FOR THREADING SPOKES INTO A TWO-FLANGED HUB OF A SPOKED WHEEL

(30) Priorité: 02.11.2020 FR 2011236
(43) Date de publication de la demande: 05.07.2023
(73) Titulaire: BIKEBOTIX, 74730 Villaz (FR)
(72) Inventeur: GAILLARD, Emmanuel, 74370 VILLAZ (FR)
(74) Mandataire: Cabinet Laurent & Charras
(86) Numéro de dépôt international: PCT/FR2021/051823
(87) Numéro de publication internationale: WO 2022/090646

(56) Documents cités:
- EP-A2- 0 933 234
- WO-A1-82/04421
- FR-A1- 2 510 486
- JP-A- H03 176 203
- US-B1- 6 401 337

## Description

### Domaine technique

L'invention se rattache au secteur technique de la fabrication de roues à rayons destinées à équiper des véhicules de locomotion, tels que des vélos ou des motocyclettes par exemple.

Plus précisément, l'invention concerne une installation et un procédé d'enfilage automatisé de rayons dans un moyeu à deux flasques d'une roue à rayons.

### Art antérieur

Les moyeux des roues à rayons comportent généralement une portion centrale cylindrique montée libre en rotation autour d'un axe et bordée à ses deux extrémités par deux flasques perpendiculaires comportant chacun une couronne d'orifices de réception des extrémités des rayons reliant le moyeu à la jante de la roue. Dans la couronne d'orifices, des branches libres des rayons sont introduites alternativement depuis une face externe et une face interne des flasques.

Il est connu du document WO1982004421 un procédé et une installation d'enfilage des rayons dans un moyeu à deux flasques d'une roue à rayons.

Selon ce document, on dispose le moyeu horizontalement et on commande sa rotation par des moyens d'entraînement permettant de réaliser un couple de freinage supérieur au couple d'entraînement produit par le poids des rayons montés sur le moyeu ; on entraîne le moyeu en rotation pour l'amener dans une position prédéterminée ; on enfile un rayon dans un orifice correspondant, on laisse pendre le rayon sous l'action de son propre poids, on entraîne en rotation le moyeu pour l'amener à la position suivante. Le changement de flasque intervient suivant le type d'insertion désirée ; on poursuit les enfilages des rayons et les rotations du moyeu jusqu'à l'introduction de tous les rayons, et le moyeu est ensuite retiré.

Cette solution donne entière satisfaction s'agissant de l'insertion des rayons en tant que telle, mais peut être améliorée en termes de rapidité d'exécution et donc de cadence de production industrielle, et de polyvalence.

D'autres documents de l'art antérieur illustrent ce principe, tels que les documents WO2007040386 ou EP0933234, mais aucun n'apporte entière satisfaction en termes de rapidité et polyvalence.

### Exposé de l'invention

L'un des buts de l'invention est de fournir un procédé et une installation d'enfilage de rayons dans un moyeu à deux flasques d'une roue à rayons, qui présentent une rapidité d'exécution et donc un rendement amélioré, ainsi qu'une souplesse et une polyvalence par rapport à ceux de l'art antérieur.

À cet effet, il a été mis au point un procédé d'enfilage de rayons dans un moyeu à deux flasques d'une roue à rayons, les flasques étant chacun pourvu d'une couronne d'orifices de réception des rayons, les rayons étant enfilés par l'intermédiaire d'au moins deux à quatre dispositifs d'éjection de rayons éjectant successivement chacun des rayons dans des orifices d'un flasque. Selon un mode de réalisation particulier, non limitatif, les rayons d'un même flasque peuvent être enfilés alternativement depuis une face interne et une face externe du flasque.

Selon l'invention, le procédé est remarquable en ce que les dispositifs d'éjection restent fixes et le moyeu est saisi, déplacé et entraîné en rotation autour de son axe par un système polyarticulé commandé pour positionner successivement les orifices des flasques devant les dispositifs d'éjection correspondants pour l'éjection et l'enfilage des rayons.

De ce qui précède, et contrairement à l'art antérieur, ce ne sont pas les dispositifs d'éjection des rayons qui sont déplacés en direction du moyeu, mais c'est le moyeu lui-même qui est déplacé successivement devant chaque dispositif d'éjection.

Ainsi, il n'est pas nécessaire d'attendre le retour arrière du dispositif d'éjection pour déplacer le dispositif d'éjection suivant, car lesdits dispositifs d'éjection sont fixes. Notamment, immédiatement après que l'un des dispositifs d'éjection ait enfilé un rayon dans un orifice, le moyeu peut être déplacé vers un deuxième dispositif d'éjection, et ainsi de suite. La cadence est donc très nettement améliorée.

Le procédé selon l'invention est également plus souple et polyvalent que ceux de l'art antérieur car il s'adapte facilement à toute taille de moyeu, ainsi qu'à toute quantité d'orifices de réception des rayons, tel que des moyeux de 12 rayons à 48 rayons, etc., sans modification mécanique du procédé et de l'installation, mais seulement avec une adaptation de la programmation des trajectoires de déplacement du système polyarticulé et une adaptation de la mise en rotation du moyeu autour de son axe.

De préférence, et toujours pour améliorer la cadence du procédé, le système polyarticulé est également commandé pour saisir et amener un moyeu vide entre les dispositifs d'éjection et, lorsque le moyeu est plein de rayons, pour l'évacuer.

De préférence, avant l'éjection des rayons, le procédé peut comprendre une étape d'analyse des positions exactes des orifices sur les deux flasques.

Selon une forme de réalisation particulière, le procédé comprend des étapes successives consistant :
a. à faire pivoter le moyeu autour de son axe pour présenter un orifice vide ou à évacuer le moyeu si tous les orifices ont reçu un rayon ;
b. après ou pendant le pivotement du moyeu, à déplacer le moyeu pour positionner la face interne ou externe d'un premier flasque devant un premier dispositif d'éjection d'un rayon et l'aligner avec l'orifice vide dudit premier flasque, et à actionner le premier dispositif d'éjection pour enfiler un rayon dans l'orifice vide depuis la face interne ou externe du premier flasque ;
c. à faire pivoter ensuite le moyeu autour de son axe pour présenter un nouvel orifice vide ou à évacuer ensuite le moyeu si tous les orifices ont reçu un rayon ;
d. après ou pendant le pivotement du moyeu, à déplacer ensuite le moyeu pour positionner la face interne ou externe de l'autre flasque devant un autre dispositif d'éjection d'un rayon et l'aligner avec un orifice dudit autre flasque, et à actionner un autre dispositif d'éjection pour enfiler un rayon dans l'orifice depuis la face interne ou externe de l'autre flasque ;
e. à reprendre le procédé à l'étape a.

L'invention concerne également une installation d'enfilage de rayons dans un moyeu à deux flasques d'une roue à rayons. Les flasques sont chacun pourvu d'une couronne d'orifices de réception des rayons. L'installation comprend deux à quatre dispositifs d'éjection de rayons destinés à éjecter successivement chacun des rayons dans des orifices d'un flasque.

Selon l'invention, l'installation comprend :
- un système polyarticulé équipé de moyens de préhension du moyeu, les moyens de préhension comprennent des moyens de mise en rotation du moyeu autour de son axe ;
- une unité de commande programmée pour commander le déplacement du système polyarticulé et les moyens de mise en rotation du moyeu pour positionner successivement les orifices des flasques devant les dispositifs d'éjection correspondants, en présentant devant lesdits dispositifs d'éjection une face externe ou une face interne du flasque, éventuellement alternativement pour chaque flasque.

Selon une forme de réalisation particulière, les dispositifs d'éjection sont positionnés sur un plan horizontal et sont positionnés de part et d'autre d'un espace déplacement du moyeu.

Selon une forme de réalisation particulière, les moyens de préhension comprennent deux paires de mâchoires parallèles, orientées dans la même direction, et éloignées l'une de l'autre pour saisir, de préférence orthogonalement, l'axe du moyeu par ses deux extrémités.

Selon une forme de réalisation particulière, les moyens de mise en rotation du moyeu comprennent un galet entraîné en rotation par un moteur et positionné en au contact d'une tranche de l'un des flasques pour entraîner en rotation le moyeu. La bonne position est assurée par exemple par un codeur.

De préférence, l'installation comprend des moyens de vérification de la position des orifices destinés à recevoir un rayon. Par exemple, ces moyens peuvent se présenter sous la forme d'un codeur, par exemple optique, mesurant la position angulaire de l'un des flasques, éventuellement associé à une cellule de photo détection détectant la position de l'orifice, par exemple après rotation du moyeu.

### Brève description des dessins

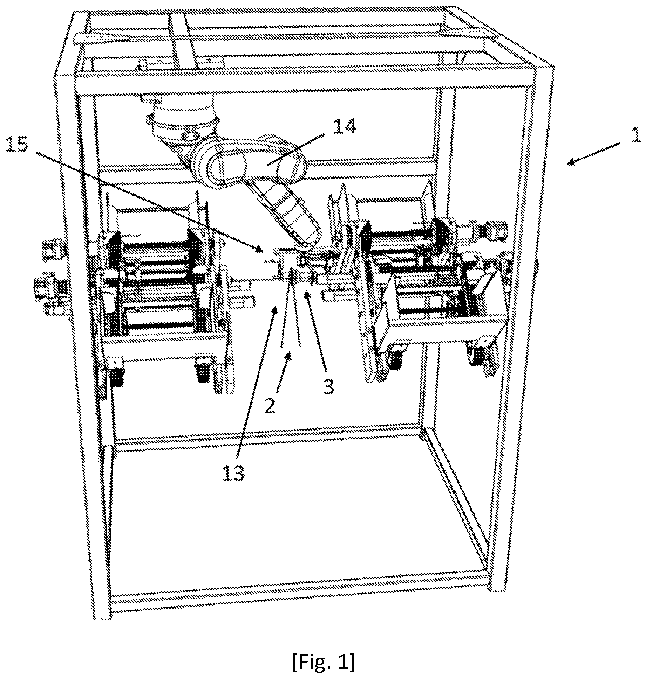

[Fig.1] la figure 1 est une vue en perspective d'une installation d'enfilage de rayons selon la présente invention, comprenant quatre dispositifs d'éjection.
[Fig.2] la figure 2 est une vue de détail de la figure 1, illustrant les quatre dispositifs d'éjection de rayons et le système polyarticulé manipulant un moyeu.
[Fig.3] La figure 3 est une vue de détail de la figure 2, illustrant le moyeu orienté et positionné devant l'un des dispositifs d'éjection de rayons, ayant enfilé un rayon dans l'un des orifices de l'un des flasques du moyeu.
[Fig.4] La figure 4 est une vue en perspective illustrant en détail les moyens de préhension du système polyarticulé, et les moyens de mise en rotation du moyeu.
[Fig.5] La figure 5 est une vue similaire à celle de la figure 4, selon un autre point de vue.

### Description détaillée de l'invention

L'invention concerne un procédé et une installation (1) d'enfilage de rayons (2) dans un moyeu (3) à deux flasques d'une roue à rayons (2), qui soient rapides et polyvalents.

D'une manière connue, un moyeu (3) d'une roue à rayons (2) comprend, d'une manière générale, une portion centrale cylindrique (4) montée libre en rotation autour d'un axe (5) et bordée à ses deux extrémités par un premier flasque (6) et un deuxième flasque (7), perpendiculaires, et comportant chacun une couronne d'orifices (8) de réception des extrémités des rayons (2) reliant le moyeu (3) à la jante de la roue.

L'installation (1) selon l'invention comprend, d'une manière connue, de deux à quatre dispositifs d'éjection (9, 10, 11, 12) de rayons (2) destinés à éjecter successivement, chacun, un rayon (2) dans un orifice (8) d'un flasque (6, 7).

Ces dispositifs d'éjection (9, 10, 11, 12) sont bien connus de l'état de la technique et ne seront pas décrits plus en détail. La seule différence par rapport aux dispositifs d'éjection de l'art antérieur est que ceux de la présente invention sont montés fixes par rapport à la structure de l'installation (1). En d'autres termes, les dispositifs d'éjection (9, 10, 11, 12), assimilés à des pistolets éjectant successivement des rayons (2), restent dans une position fixe et ne sont pas déplacés en direction du moyeu (3), c'est le moyeu (3) lui-même qui est déplacé en direction des dispositifs d'éjection (9, 10, 11, 12), tel qu'il sera décrit plus bas.

Selon une autre caractéristique de l'invention, les deux à quatre dispositifs d'éjection (9, 10, 11, 12) sont de préférence positionnés à plat, c'est-à-dire sur un même plan horizontal et sont de préférence positionnés de sorte à avoir des premier et deuxième dispositifs d'éjection (9, 10) positionnés d'un côté d'un espace (13) de déplacement du moyeu (3), notamment du côté d'une face externe du premier flasque (6), et les troisième et quatrième dispositifs d'éjection (11, 12) positionnés d'un autre côté de l'espace (13) de déplacement du moyeu (3), notamment du côté d'une face externe du deuxième flasque (7).

En d'autres termes, vu de dessus, les deux à quatre dispositifs d'éjection (9, 10, 11, 12) sont positionnés sur un même plan horizontal, un à deux à gauche, un à deux à droite, face à face deux à deux de part et d'autre de l'espace (13) de déplacement du moyeu (3), en étant légèrement décalés, en quinconce, pour que le rayon (2) éjecté par l'un des dispositifs d'éjection n'entre pas en collision avec le dispositif d'éjection d'en face. Les premier et deuxième dispositifs d'éjection (9, 10) font sensiblement face aux troisième et quatrième dispositifs d'éjection (11, 12).

L'installation (1) selon l'invention est avantageuse en ce qu'elle permet de mettre en oeuvre un procédé d'enfilage dans lequel, comme indiqué, les dispositifs d'éjection (9, 10, 11, 12) restent fixes et, c'est le moyeu (3) qui est saisi, déplacé et entraîné en rotation autour de son axe (5) par un système polyarticulé (14) commandé pour positionner successivement les orifices (8) des flasques devant les dispositifs d'éjection (9, 10, 11, 12) correspondants pour l'éjection et l'enfilage des rayons (2) en notant que, d'une manière connue, les rayons (2) d'un même flasque (6, 7) peuvent être enfilés alternativement, mais pas nécessairement, depuis une face interne et une face externe du flasque (6, 7).

À cet effet, l'installation (1) comprend un système polyarticulé (14), tel qu'un robot six axes équipé de moyens de préhension (15) du moyeu (3), lesquels comprennent des moyens de mise en rotation (16) du moyeu (3) autour de son axe (5), et une unité de commande (non représentée) programmée pour commander le déplacement du système polyarticulé (14), et pour commander les moyens de mise en rotation (16) du moyeu (3), afin de positionner successivement les orifices (8) des flasques (6, 7) devant les dispositifs d'éjection (9, 10, 11, 12) correspondants, en présentant devant les desdits dispositifs d'éjection, pour chaque flasque, par exemple alternativement une face externe et une face interne du flasque.

Plus précisément, le procédé mis en oeuvre par l'installation (1) fonctionne de préférence selon une séquence particulière.

Par exemple, dans le cas d'une installation comprenant deux dispositifs d'éjection, le procédé consiste, selon une étape dite initiale à faire pivoter le moyeu (3) autour de son axe pour présenter un orifice (8) vide.

Après ou pendant le pivotement du moyeu, le système polyarticulé (14) déplace le moyeu pour positionner la face interne ou externe d'un flasque devant un dispositif d'éjection d'un rayon et l'aligne avec l'orifice vide dudit flasque. Le dispositif d'éjection est ensuite actionné pour enfiler un rayon dans l'orifice vide depuis la face interne ou externe du flasque ;

Ensuite, les moyens de mise en rotation (16) font pivoter le moyeu autour (3) de son axe pour présenter un nouvel orifice (8) vide.

Après ou pendant le pivotement du moyeu (3), le système polyarticulé (14) déplace le moyeu pour positionner la face interne ou externe de l'autre flasque devant un autre dispositif d'éjection d'un rayon et l'aligner avec un orifice dudit autre flasque. L'autre dispositif d'éjection est ensuite actionné pour enfiler un rayon dans l'orifice depuis la face interne ou externe de l'autre flasque.

Les moyens de mise en rotation (16) du système polyarticulé (14) sont ensuite commandés par l'unité de commande pour faire pivoter le moyeu (3) autour de son axe (5) afin de présenter un nouvel orifice (8) vide. Bien entendu, si tous les orifices (8) ont reçu un rayon (2), le moyeu (3) est évacué de l'installation (1).

Par exemple, dans le cas d'une installation comprenant quatre dispositifs d'éjection, le procédé consiste, selon une étape dite initiale, à faire pivoter le moyeu (3) autour de son axe pour présenter un orifice (8) vide et déplacer le moyeu (3) par l'intermédiaire du système polyarticulé (14) pour positionner la face externe du premier flasque (6) devant le premier dispositif d'éjection (9) et l'aligner avec un orifice (8) dudit premier flasque (6). Lorsque le moyeu (3) est en position, le premier dispositif d'éjection (9) est actionné pour éjecter un rayon (2) et l'enfiler dans l'orifice (8) du premier flasque (6) par l'extérieur, c'est-à-dire depuis la face externe du premier flasque (6). Bien entendu, le moyeu (3) est incliné dans le plan horizontal et/ou vertical pour éviter que le rayon (2) n'entre en collision contre le deuxième flasque (7).

Immédiatement après avoir reçu le rayon (2), le système polyarticulé (14) met en rotation et déplace ensuite le moyeu (3) pour positionner la face interne du deuxième flasque (7) devant le deuxième dispositif d'éjection (10), notamment celui du même côté de l'espace (13) de déplacement du moyeu (3), à savoir du côté du premier flasque (6), et pour l'aligner avec un orifice (8) dudit deuxième flasque (7). Pour ce faire, le système polyarticulé (14) doit orienter et incliner le moyeu (3). Lorsque le moyeu (3) est en position, le deuxième dispositif d'éjection (10) est actionné pour éjecter un rayon (2) et l'enfiler dans l'orifice (8), par l'extérieur du deuxième flasque (7), c'est-à-dire depuis la face interne.

Les moyens de mise en rotation (16) du système polyarticulé (14) sont ensuite commandés par l'unité de commande pour faire pivoter le moyeu (3) autour de son axe (5) afin de présenter un nouvel orifice (8) vide. Bien entendu, si tous les orifices (8) ont reçu un rayon (2), le moyeu (3) est évacué de l'installation (1).

Si le moyeu (3) a été pivoté autour de son axe (5) pour présenter deux nouveaux orifices (8) vides, le procédé consiste ensuite à déplacer le moyeu (3) par l'intermédiaire du système polyarticulé (14) pour positionner cette fois-ci la face interne du premier flasque (6) devant le troisième dispositif d'éjection (11), notamment situé de l'autre côté de l'espace (13) de déplacement du moyeu (3) par rapport au deuxième dispositif d'éjection (10), à savoir du côté du deuxième flasque (7), et sensiblement en face dudit deuxième dispositif d'éjection (10). Le moyeu (3) est positionné pour aligner le troisième dispositif d'éjection (11) avec un orifice (8) du premier flasque (6). Lorsque le moyeu (3) est en position, le troisième dispositif d'éjection (11) est actionné pour éjecter un rayon (2) et l'enfiler dans l'orifice (8) par l'intérieur du premier flasque (6), c'est-à-dire depuis la face interne. Pour ce faire, le système polyarticulé (14) doit orienter et incliner le moyeu (3) pour éviter les collisions.

Immédiatement après avoir reçu le rayon (2), le moyeu (3) est mis en rotation et déplacé par le système polyarticulé (14) pour positionner cette fois-ci la face externe du deuxième flasque (7) devant le quatrième dispositif d'éjection (12), notamment situé du même côté de l'espace (13) de déplacement du moyeu (3) que le troisième dispositif d'éjection (11) et sensiblement en face du premier dispositif d'éjection (9), à savoir du côté du deuxième flasque (7). Le moyeu (3) est positionné pour aligner le quatrième dispositif d'éjection (12) avec un orifice (8) dudit deuxième flasque (7), en tenant compte des contraintes d'inclinaison pour éviter les collisions. Lorsque que le moyeu (3) est en position le quatrième dispositif d'éjection (12) est actionné pour éjecter un rayon (2) et l'enfiler dans l'orifice (8) par l'extérieur du deuxième flasque (7), c'est-à-dire depuis sa face externe.

Si tous les orifices (8) ont reçu un rayon (2), le moyeu (3) est évacué. Sinon les moyens de mise en rotation (16) du moyeu (3) sont actionnés pour faire pivoter le moyeu (3) autour de son axe (5) pour présenter un nouvel orifice vide et le procédé est repris à l'étape dite initiale pour démarrer une nouvelle séquence.

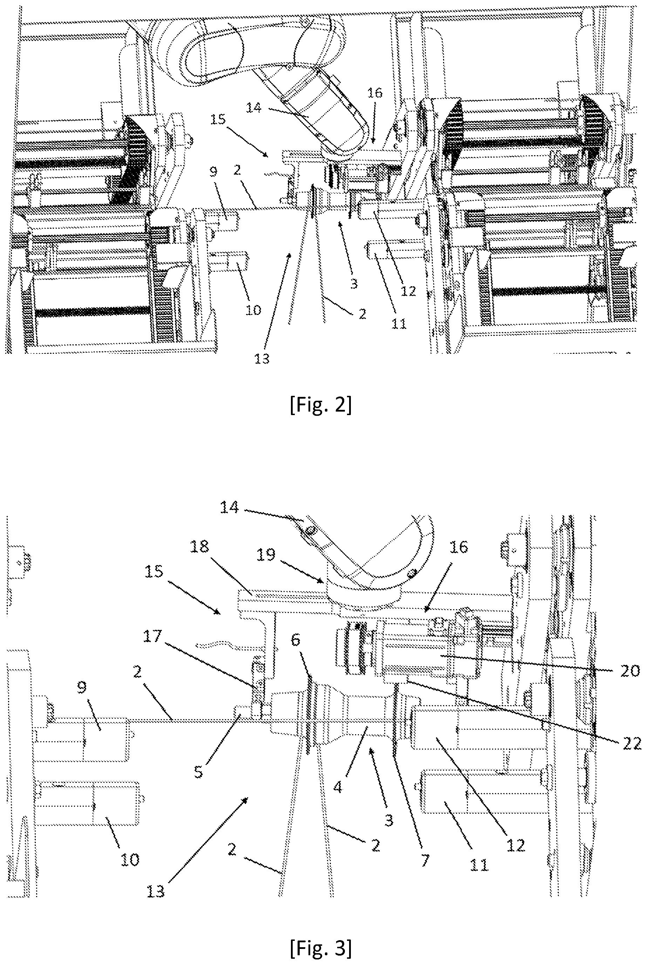

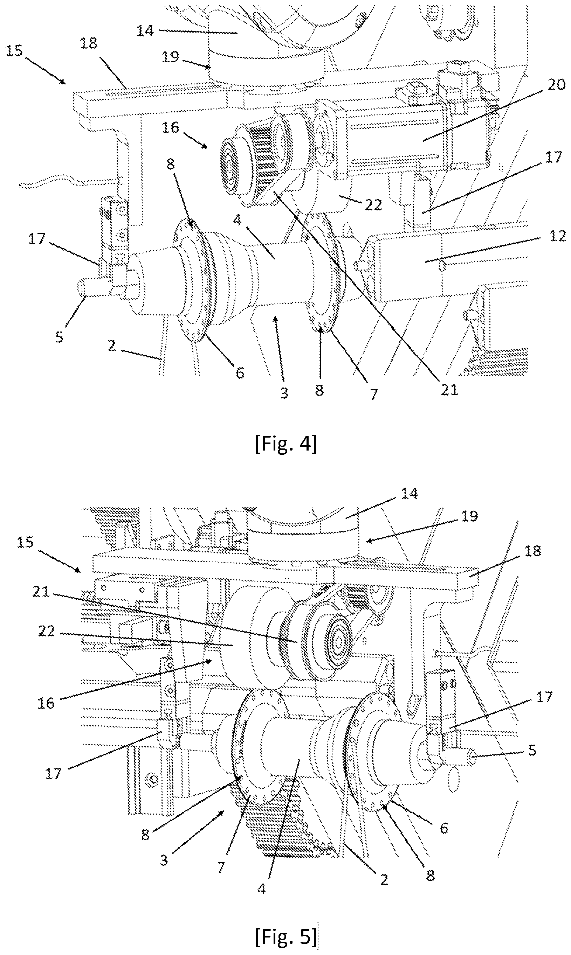

Les moyens de préhension (15) du moyeu (3) peuvent être de tout type approprié. Par exemple, en référence aux figures 3 à 5, les moyens de préhension (15) comprennent deux paires de mâchoires (17) parallèles, orientées dans la même direction, et éloignées l'une de l'autre pour saisir, par exemple orthogonalement, l'axe (5) du moyeu (3) par ses deux extrémités. Ces mâchoires (17) sont supportées par exemple par une pièce support (18) en forme de U, dont les deux branches sont prolongées par lesdites mâchoires (17). La base de la pièce support (18) est, quant à elle, reliée de manière articulée au système polyarticulé (14), notamment par l'intermédiaire d'une liaison pivot (19) permettant de pivoter ladite pièce support (18) autour d'un axe (5) parallèle aux branches de la pièce support (18), et orthogonal à l'axe (5) du moyeu (3).

Les moyens de mise en rotation (16) du moyeu (3) autour de son axe (5) comprennent par exemple un moteur (20), fixé de préférence à la pièce support (18) et entraînant en rotation, par l'intermédiaire d'une courroie de transmission (21), un galet (22) positionné au contact de la tranche de l'un des flasques (6, 7) pour l'entraîner en rotation, et donc entraîner en rotation le moyeu (3).

La rotation s'effectue alors pas à pas, et permet de présenter, successivement, deux nouveaux orifices (8) vides pour la réception des rayons (2).

Les différentes positions du moyeu (3), déplacé par le système polyarticulé (14), sont de préférence vérifiées, par exemple par l'intermédiaire de moyens de vérification de la position des orifices (8) destinés à recevoir un rayon (2). Ces moyens peuvent par exemple se présenter sous la forme d'un codeur, par exemple optique, mesurant la position angulaire de l'un des flasques (6, 7), éventuellement associé à une cellule de photo détection détectant la position de l'orifice (8), par exemple après rotation du moyeu.

Il ressort de ce qui précède que le procédé et l'installation selon l'invention permettent d'enfiler des rayons dans des flasques d'un moyeu d'une roue à rayons d'une manière très rapide et polyvalente.

## Revendications

1. Procédé d'enfilage de rayons (2) dans un moyeu (3) à deux flasques (6, 7) d'une roue à rayons (2), les flasques (6, 7) étant chacun pourvu d'une couronne d'orifices (8) de réception des rayons (2), les rayons (2) étant enfilés par l'intermédiaire de deux à quatre dispositifs d'éjection (9, 10, 11, 12) de rayons (2) éjectant successivement chacun un rayon (2) dans un orifice (8) d'un flasque (6, 7), le procédé étant **caractérisé en ce que** les dispositifs d'éjection (9, 10, 11, 12) restent fixes et le moyeu (3) est saisi, déplacé et entraîné en rotation autour de son axe (5) par un système polyarticulé (14) commandé pour positionner successivement les orifices (8) des flasques (6, 7) devant les dispositifs d'éjection (9, 10, 11, 12) correspondants pour l'éjection et l'enfilage des rayons (2).

2. Procédé selon la revendication 1, **caractérisé en ce que** le système polyarticulé (14) est également commandé pour saisir et amener un moyeu (3) vide entre les dispositifs d'éjection (9, 10, 11, 12) et, pour l'évacuer le moyeu (3) lorsqu'il est plein de rayons.

3. Procédé selon la revendication 1, **caractérisé en ce que**, avant l'éjection des rayons, le procédé comprend une étape d'analyse des positions exactes des orifices sur les deux flasques.

4. Procédé selon la revendication 1, **caractérisé en ce qu'**il comprend des étapes successives consistant :
a. à faire pivoter le moyeu (3) autour de son axe (5) pour présenter un orifice (8) vide ou à évacuer le moyeu (3) si tous les orifices (8) ont reçu un rayon (2) ;
b après ou pendant le pivotement du moyeu (3), à déplacer le moyeu (3) pour positionner la face interne ou externe d'un premier flasque (6) devant un premier dispositif d'éjection et l'aligner avec l'orifice (8) vide dudit premier flasque (6), et à actionner le premier dispositif d'éjection pour enfiler un rayon (2) dans l'orifice (8) vide depuis la face interne ou externe du premier flasque (6) ;
c. à faire pivoter ensuite le moyeu (3) autour de son axe (5) pour présenter un nouvel orifice (8) vide ou à évacuer ensuite le moyeu (3) si tous les orifices (8) ont reçu un rayon (2) ;
d. après ou pendant le pivotement du moyeu (3), à déplacer ensuite le moyeu (3) pour positionner la face interne ou externe de l'autre flasque (7) devant un autre dispositif d'éjection d'un rayon et l'aligner avec un orifice (8) dudit autre flasque (7), et à actionner un autre dispositif d'éjection pour enfiler un rayon (2) dans l'orifice depuis la face interne ou externe de l'autre flasque (7) ;
e. à reprendre le procédé à l'étape a.

5. Installation (1) d'enfilage de rayons (2) dans un moyeu (3) à deux flasques (6, 7) d'une roue à rayons (2), les flasques (6, 7) étant chacun pourvu d'une couronne d'orifices (8) de réception des rayons (2), l'installation (1) comprend deux à quatre dispositifs d'éjection (9, 10, 11, 12) de rayons (2) destinés à éjecter successivement chacun un rayon (2) dans un orifice (8) d'un flasque (6, 7), l'installation (1) étant **caractérisée en ce qu'**elle comprend :
- un système polyarticulé (14) équipé de moyens de préhension (15) du moyeu (3), les moyens de préhension (15) comprennent des moyens de mise en rotation (16) du moyeu (3) autour de son axe (5) ;
- une unité de commande programmée pour commander le déplacement du système polyarticulé (14) et les moyens de mise en rotation (16) du moyeu (3) pour positionner successivement les orifices (8) des flasques (6, 7) devant les dispositifs d'éjection (9, 10, 11, 12) correspondants, en présentant devant lesdits dispositifs d'éjection (9, 10, 11, 12) une face externe ou une face interne du flasque (6, 7).

6. Installation (1) selon la revendication 5, **caractérisée en ce que** les dispositifs d'éjection (9, 10, 11, 12) sont positionnés sur un plan horizontal et de part et d'autre d'un espace déplacement du moyeu (3).

7. Installation (1) selon la revendication 5, **caractérisée en ce que** les moyens de préhension (15) comprennent deux paires de mâchoires (17) parallèles, orientées dans la même direction, et éloignées l'une de l'autre pour saisir l'axe (5) du moyeu (3) par ses deux extrémités.

8. Installation (1) selon la revendication 5, **caractérisée en ce que** les moyens de mise en rotation (16) du moyeu (3) comprennent un galet (22) entraîné en rotation par un moteur (20) et positionné au contact d'une tranche de l'un des flasques (6, 7) pour entraîner en rotation le moyeu (3).

9. Installation (1) selon la revendication 5, **caractérisée en ce qu'**elle comprend des moyens de vérification de la position des orifices (8) destinés à recevoir un rayon (2).

10. Installation (1) selon la revendication 9, **caractérisée en ce que** les moyens de vérification comprennent un codeur, par exemple optique, mesurant la position angulaire de l'un des flasques (6, 7).

## Patentansprüche

1. Verfahren zum Einfädeln von Speichen (2) in eine Nabe (3) mit zwei Flanschen (6, 7) eines Speichenrades (2), die Flansche (6, 7) sind dabei jeweils mit einem Kranz Öffnungen (8) zur Aufnahme der Speichen (2) ausgestattet, die Speichen (2) werden über zwei bis vier Ausstoßvorrichtungen (9,10, 11, 12) für Speichen (2) eingefädelt, die nacheinander jeweils eine Speiche (2) in eine Öffnung (8) eines Flansches (6, 7) einspeichen, das Verfahren ist **dadurch gekennzeichnet, dass** die Ausstoßvorrichtungen (9, 10,11, 12) fest bleiben und die Nabe (3) ergriffen, verschoben und um ihre Achse (5) über ein System mit mehreren Gelenken (14) gedreht wird, gesteuert um nacheinander die Öffnungen (8) der Flansche (6, 7) vor die entsprechenden Ausstoßvorrichtungen (9,10, 11, 12) zu bringen, zum Ausstoßen und Einfädeln der Speichen (2).

2. Verfahren nach Anspruch 1, **dadurch gekennzeichnet, dass** das System mit mehreren Gelenken (14) auch dazu gesteuert wird, eine leere Nabe (3) zwischen den Ausstoßvorrichtungen (9, 10, 11, 12) zu ergreifen und weiterzubewegen, die Nabe (3) zu entfernen, wenn sie vollständig eingespeicht ist.

3. Verfahren nach Anspruch 1, **dadurch gekennzeichnet, dass** vor dem Ausstoß der Speichen das Verfahren einen Schritt der genauen Positionsanalyse der Öffnungen auf den beiden Flanschen enthält.

4. Verfahren nach Anspruch 1, **dadurch gekennzeichnet, dass** es die nachstehenden aufeinanderfolgenden Schritte enthält:
a. die Nabe (3) um ihre Achse (5) kippen, um eine leere Öffnung (8) anzubieten oder die Nabe (3) zu entfernen, wenn alle Öffnungen (8) mit Speichen (2) versehen wurden;
b. vor oder während dem Kippen der Nabe (3), die Nabe (3) weiterbewegen, um die Innen- oder Außenseite eines ersten Flansches (6) vor einer ersten Ausstoßvorrichtung zu positionieren und sie mit einer leeren Öffnung (8) dieses ersten Flanschs (6) auszurichten und die erste Ausstoßvorrichtung zu betätigen, um eine Speiche (2) in die leere Öffnung (8), von der Innen- oder Außenseite des ersten Flansches (6) aus, einzufädeln;
c. dann die Nabe (3) um ihre Achse (5) kippen, um eine neue leere Öffnung (8) anzubieten oder dann die Nabe (3) zu entfernen, wenn alle Öffnungen (8) mit Speichen (2) versehen wurden;
d. vor oder während des Kippens der Nabe (3), dann die Nabe (3) weiterbewegen, um die Innen- oder Außenseite des anderen Flanschs (7) vor eine andere Ausstoßvorrichtung einer Speiche zu bringen und mit einer Öffnung (8) dieses anderen Flanschs (7) auszurichten und eine andere Ausstoßvorrichtung zu betätigen, um eine Speiche (2) in die Öffnung von der Innen- oder Außenseite des ersten Flansches (7) einzufädeln
e. das Verfahren in Schritt a erneut beginnen.

5. Anlage (1) zum Einfädeln von Speichen (2) in einer Nabe (3) mit zwei Flanschen (6, 7) eines Speichenrads (2), die Flansche (6, 7) sind dabei jeweils mit einem Kranz von Aufnahmeöffnung (8) für die Speichen (2) versehen, die Anlage (1) umfasst zwei bis vier Ausstoßvorrichtungen (9, 10, 11, 12) für Speichen (2), um nacheinander jeweils eine Speiche (2) in die Öffnung (8) eines Flansches (6, 7) auszustoßen, die Anlage (1) ist **dadurch gekennzeichnet, dass** sie umfasst:
- ein System mit mehreren Gelenken (14), ausgerüstet mit Greifvorrichtungen (15) für die Nabe (3), die Greifvorrichtungen (15) umfassen Mittel (16), um die Nabe (3) um ihre Achse (5) herum in Bewegung zu versetzen.
- eine programmierte Steuereinheit, um die Weiterbewegung des Systems mit mehreren Gelenken (14) und die Mittel zur Rotationsbewegung (16) der Nabe (3) zu steuern, um nacheinander die Öffnungen (8) der Flansche (6, 7) vor die entsprechenden Ausstoßvorrichtungen (9, 10, 11, 12) zu bringen, indem vor diesen Ausstoßvorrichtungen (9, 10, 11, 12) eine Innenseite oder eine Außenseite des Flansches (6, 7) präsentiert wird.

6. Anlage (1) nach Anspruch 5, **dadurch gekennzeichnet, dass** die Ausstoßvorrichtungen (9, 10, 11, 12) in einer horizontalen Ebene positioniert sind und beiderseits eines Weiterbewegungsbereichs der Nabe (3).

7. Anlage (1) nach Anspruch 5, **dadurch gekennzeichnet, dass** die Greifvorrichtungen (15) zwei Paar parallele Backen (17) umfassen, orientiert in dieselbe Richtung und mit einem Abstand zueinander, um die Achse (5) der Nabe (3) an ihren beiden Endstücken zu ergreifen.

8. Anlage (1) nach Anspruch 5, **dadurch gekennzeichnet, dass** die Mittel (16), um die Nabe (3) um ihre Achse (5) herum in Bewegung zu versetzen. eine Rolle (22) enthalten, in Rotation angetrieben durch einen Motor (20) und positioniert in Kontakt mit einem Abschnitt eines der Flansche (6, 7) um die Nabe (3) in Rotation zu versetzen.

9. Anlage (1) nach Anspruch 5, **dadurch gekennzeichnet, dass** sie Mittel zur Überprüfung der Position der Öffnungen (8), die zur Aufnahme einer Speiche (2) bestimmt sind, enthält.

10. Anlage (1) nach Anspruch 9, **dadurch gekennzeichnet, dass** die Mittel zur Überprüfung einen Codierer umfassen, zum Beispiel optisch, der die Winkelposition eines der Flansche (6, 7) misst.

## Claims

1. A method for threading spokes (2) into a hub (3) with two flanges (6, 7) of a wheel with spokes (2), wherein each of the flanges (6, 7) is provided with a ring of holes (8) for receiving the spokes (2), the spokes (2) being threaded by means of two to four spoke (2) ejection devices (9, 10, 11, 12), each successively ejecting a spoke (2) into a hole (8) of a flange (6, 7), the method being **characterized in that** the ejection devices (9, 10, 11, 12) remain fixed and the hub (3) is gripped, displaced and driven in rotation about its axis (5) by a polyarticulated system (14) controlled to successively position the holes (8) of the flanges (6, 7) in front of the corresponding ejection devices (9, 10, 11, 12) for ejecting and threading the spokes (2).

2. The method according to claim 1, **characterized in that** the polyarticulated system (14) is also controlled to grip and bring an empty hub (3) between the ejection devices (9, 10, 11, 12) and to remove the hub (3) when it is full of spokes.

3. The method according to claim 1, **characterized in that**, before the ejection of the spokes, the method comprises a step of analyzing the exact positions of the holes on the two flanges.

4. The method according to claim 1, **characterized in that** it comprises successive steps consisting of:
a. causing the hub (3) to rotate about its axis (5) in order to present an empty hole (8) or to remove the hub (3) if all the holes (8) have received a spoke (2);
b. after or during the rotation of the hub (3), displacing the hub (3) to position the internal or external face of a first flange (6) in front of a first ejection device and align it with the empty hole (8) of said first flange (6), and actuating the first ejection device to thread a spoke (2) into the empty hole (8) from the internal or external face of the first flange (6);
c. subsequently rotating the hub (3) about its axis (5) in order to present a new empty hole (8) or subsequently removing the hub (3) if all the holes (8) have received a spoke (2);
d. after or during the rotation of the hub (3), subsequently displacing the hub (3) to position the internal or external face of the other flange (7) in front of another spoke ejection device and align it with a hole (8) of said other flange (7), and actuating another ejection device to thread a spoke (2) into the hole from the internal or external face of the other flange (7);
e. repeating the method from step a.

5. An installation (1) for threading spokes (2) into a hub (3) with two flanges (6, 7) of a wheel with spokes (2), wherein each of the flanges (6, 7) is provided with a ring of holes (8) for receiving spokes (2), the installation (1) comprises two to four ejection devices (9, 10, 11, 12) for spokes (2), each intended to successively eject a spoke (2) into a hole (8) of a flange (6, 7), the installation (1) being **characterized in that** it comprises:
- a polyarticulated system (14) equipped with means (15) for gripping the hub (3), the gripping means (15) comprising means (16) for rotating the hub (3) about its axis (5);
- a control unit programmed to control the displacement of the polyarticulated system (14) and the means for rotating (16) the hub (3) in order to successively position the holes (8) of the flanges (6, 7) in front of the corresponding ejection devices (9, 10, 11, 12), presenting in front of said ejection devices (9, 10, 11, 12) an external face or an internal face of the flange (6, 7).

6. The installation (1) according to claim 5, **characterized in that** the ejection devices (9, 10, 11, 12) are positioned on a horizontal plane and on either side of a displacement space of the hub (3).

7. The installation (1) according to claim 5, **characterized in that** the gripping means (15) comprise two pairs of parallel jaws (17), oriented in the same direction, and spaced apart from one another to grip the axis (5) of the hub (3) by its two ends.

8. The installation (1) according to claim 5, **characterized in that** the rotating means (16) of the hub (3) comprise a roller (22) driven in rotation by a motor (20) and positioned in contact with an edge of one of the flanges (6, 7) in order to drive the hub (3) in rotation.

9. The installation (1) according to claim 5, **characterized in that** it comprises means for verifying the position of the holes (8) intended to receive spokes (2).

10. The installation (1) according to claim 9, **characterized in that** the verification means include an encoder, for example optical, for measuring the angular position of one of the flanges (6, 7).
